(19) Europäisches Patentamt
European Patent Office
Office européen des brevets

(11) EP 1 411 262 B1

(12) **EUROPEAN PATENT SPECIFICATION**

(45) Date of publication and mention of the grant of the patent:
**22.08.2007 Bulletin 2007/34**

(51) Int Cl.:
***F16D 48/06*** *(2006.01)* ***B60K 23/02*** *(2006.01)*

(21) Application number: **03078311.2**

(22) Date of filing: **20.10.2003**

(54) **Clutch control device**

Kupplungssteuerungseinrichtung

Dispositif de commande d'embrayage

(84) Designated Contracting States:
**DE FR GB**

(30) Priority: **18.10.2002 JP 2002304105**

(43) Date of publication of application:
**21.04.2004 Bulletin 2004/17**

(73) Proprietors:
- **AISIN SEIKI KABUSHIKI KAISHA**
  **Kariya-shi, Aichi-ken (JP)**
- **AISIN AI Co., Ltd.**
  **Nishio-shi,**
  **Aichi-ken (JP)**
- **Toyota Jidosha Kabushiki Kaisha**
  **Toyota-shi, Aichi-ken, 471-8571 (JP)**

(72) Inventors:
- **Terakawa, Tomomitsu**
  **Anjo-shi,**
  **Aichi-ken (JP)**
- **Taguchi, Yoshinori**
  **Anjo-shi,**
  **Aichi-ken (JP)**
- **Shimuzu, Masaru**
  **Toyota-shi,**
  **Aichi-ken (JP)**
- **Haneda, Yoshitomi**
  **Anjo-shi,**
  **Aichi-ken (JP)**
- **Miyazaki, Takeshige**
  **Anjo-shi,**
  **Aichi-ken (JP)**
- **Watanabe, Hideo,**
  **c/o Toyota Jidosha Kabushi Kaisha**
  **Toyota-shi,**
  **Aichi-ken (JP)**
- **Ohi, Takao,**
  **c/o Toyota Jidosha Kabushi Kaisha**
  **Toyota-shi,**
  **Aichi-ken (JP)**
- **Nishizawa, Jun**
  **c/o Toyota Jidosha Kabushi Kaisha**
  **Toyota-shi,**
  **Aichi-ken (JP)**
- **Otsubo, Hideaki,**
  **c/o Toyota Jidosha Kabushi Kaisha**
  **Toyota-shi,**
  **Aichi-ken (JP)**
- **Inoue, Takashi,**
  **c/o Toyota Jidosha Kabushi Kaisha**
  **Toyota-shi,**
  **Aichi-ken (JP)**

(74) Representative: **Marshall, John Grahame**
**SERJEANTS**
**25 The Crescent**
**King Street**
**Leicester LE1 6RX (GB)**

(56) References cited:
**EP-A- 0 872 657** **DE-A1- 10 126 080**
**DE-A1- 19 751 455** **US-A- 5 322 150**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

This invention generally relates to clutch control devices. More particularly, this invention pertains to a clutch control device which controls an engaging condition between a clutch disc and a flywheel by actuation of an actuator.

### BACKGROUND OF THE INVENTION

A system is known which automatically performs a series of shift operations engaging/disengaging a clutch, gear shift, gear selection) in response to a driver's intention or vehicle condition by utilizing an actuator for clutch control in association with an existing manual transmission. In this system, the clutch control, for example clutch torque transferred between a flywheel and a clutch disc, is controlled by control of the actuator. Then, the clutch is properly controlled in response to the vehicle condition.

The outline relationship between the clutch torque and a clutch stroke as a controlling variable, controlled by the actuator, is explained below together with an outline of the correction. Fig. 10 is a graph showing the relationship between the clutch torque and the clutch stroke. In Fig. 10, a zero point of the clutch stroke corresponds to a position in which the clutch disc is disengaged from the flywheel. On the right hand side of the zero point an increasing clutch stroke acts to increase the clutch torque. In Fig. 10, a heavy line corresponds to an actual relationship between the clutch torque and the clutch stroke in which a characteristic variation is generated due to aged deterioration, a dotted line corresponds to a reference relationship between the clutch torque and the clutch stroke memorized in a ROM of an ECU as a factory setting, and a thin line corresponds to a virtual relationship between the clutch torque and the clutch stroke corrected based on difference between the actual relationship and the reference relationship. The clutch torque **Tcs** is a preset value of the clutch stroke corrected based on difference between the actual relationship and the reference relationship. The clutch torque **Tcs** is a preset value of the clutch torque at a learning point previously set so as to correspond to predetermined clutch stroke, and the clutch torque **Tc** is an actual value of the clutch torque at the learning point. The actual clutch torque **Tc** is calculated in accordance with a well-known equation in a half clutch state.

With reference to the correction in the relation between the clutch torque and the clutch stroke, a clutch torque correction coefficient **kc** is initially calculated at the learning point of the clutch torque **Tcs** in accordance with the following equation schematically.

$$kc = (Tc - Tcs)/Tcs$$

This clutch torque correction coefficient **kc** thus corresponds to a proportional difference between the preset value **Tc** and the actual value **Tcs** of the clutch torque at the learning point. If the difference between a memorized value in the ROM and an actual value at any clutch torque is similar to the proportional difference at the learning point, the difference at any clutch torque can be approximately absorbed by multiplying the foregoing clutch torque correction coefficient **kc** by the memorized value.

For example, when the clutch torque is controlled in order to transmit required target clutch torque, target clutch torque is corrected by multiplying base target clutch torque corresponding to the vehicle condition by the clutch torque correction coefficient **kc**, then the difference between the memorized value and the actual value is approximately absorbed.

One example of such a clutch control device is given in DE-A-10126080. In the above-described correction of the clutch torque, the proportional difference between the preset value and the actual value at a single learning point (clutch torque **Tcs**) is assumed to be approximately similar to the proportional difference at any clutch torque. However, with reference to a clutch torque **Tc** in which deviation from the clutch torque **Tcs** is large, the inventors have observed that a proportional difference at this clutch torque **Tc** is actually largely varied relative to the proportional difference at the learning point. That is, with reference to the clutch torque in which deviation from the clutch torque **Tcs** is large, difference between a memorized value in corresponding ROM and an actual value cannot be sufficiently absorbed.

The present invention therefore seeks to provide a clutch control device which can properly control clutch torque in response to variations in the above characteristic.

### SUMMARY OF THE INVENTION

The invention provides a clutch control system having the features of claim 1 herein. The weightings applied to each in turn of the correction coefficients enable the correction of the clutch actuator movement to be smoothly transferred from a situation in which the clutch engagement condition corresponds precisely to one of the controlled learning points and zero weighting is given to all other correction coefficients, and situations in which the clutch engagement condition corresponds to a departure from those predefined earning points. In the latter case two or more correction coefficients are combined each with its own weighting, and a smooth transition is achieved from one zone of clutch engagement to the next. Preferably the sum of all the weightings applied to the different correction coefficients is **one** [1] for all clutch engagement conditions.

BRIEF DESCRIPTION OF THE DRAWING FIGURES

In the drawings

Fig. 1 is a schematic view of a vehicle clutch control system according to an embodiment of the present invention;

Fig. 2 is a flowchart of the overall control exerted by the ECU of Fig. 1;

Figs. 3 to 7 are flowcharts of certain subroutines in the control exerted by the ECU of Fig. 1;

Fig. 8 is a graph showing a membership function utilised in the control exerted by the ECU of Fig. 1;

Fig. 9 is a graph illustrating the manner of absorbing the difference between a preset value and an actual value of clutch torque in the control exerted by the ECU of Fig. 1; and

Fig. 10 is a graph describing a known manner which absorbs difference between a preset value and an actual value of clutch torque.

DETAILED DESCRIPTION OF THE INVENTION

Fig. 1 shows a schematic view of a vehicle clutch control system according to the present invention. In this system, a flywheel 10a rotates together with an output shaft of an engine 10, and an automatic clutch 20 is assembled to the flywheel 10a. A transmission 30 is connected to the engine 10 via the automatic clutch 20.

The engine 10 is provided with an ignition switch 11 and a sensor 16 for detecting the rate of revolution of the engine 10 (hereinafter referred to as **Ne**).

The automatic clutch 20 includes a mechanical type friction clutch 21, a clutch lever 22, and a clutch actuator 23. The clutch actuator 23 controls the transmission of torque through the friction clutch 21 via the clutch lever 22.

The friction clutch 21 is provided so as to face the flywheel 10a. The friction clutch 21 includes a clutch disc 21 a rotating together with an input shaft 31 of the transmission 30. In the friction clutch 21, the torque transmission between the flywheel 10a and the clutch disc 21 a is varied in response to variation of pressure load of the clutch disc 21a against the flywheel 10a.

Hereinafter, torque transmitted from the flywheel 10a to the clutch disc 21a is referred to as clutch torque. The vehicle can smoothly be started and properly accelerated by clutch torque control depending on the vehicle condition.

The clutch actuator 23 includes an electric motor 24 as a driving source. In the clutch actuator 23, a rod 25 is moved forward and backward by actuation of the motor 24, and the clutch lever 22 is actuated. The clutch lever 22 acts on a release bearing 27 which is resiliently connected to a diaphragm spring 28 to impart an axial load on a pressure plate 29. The pressure plate 29 is supported by a cover 21b of the friction clutch 21 which rotates together with the flywheel 10a. As described above, the clutch actuator 23 varies the pressure load of the clutch disc 21 a on the flywheel 10a via the pressure plate 29 by actuating the clutch lever 22 via the rod 25, and thus controls the transmission of torque by the friction clutch 21.

Specifically, when the clutch lever 22 is pushed in rightward direction in Fig. 1 by forward movement of the rod 25, the pressure load of the clutch disc 21a on the flywheel 10a is decreased. Conversely, when the clutch lever 22 is returned by the backward movement of the rod 25, the pressure load of the clutch disc 21a is increased.

Hereinafter, the transmission of rotation by the friction clutch 21 corresponding to the movement of the rod 25 is described. When the rod 25 is moved fully forwards, the flywheel 10a becomes disengaged from the clutch disc 21a, and the transmission of torque between the flywheel 10a and the clutch disc 21a is no longer performed. This state in which the transmission of rotation is not performed is referred to as a disengaged state of the friction clutch 21, and a position of the rod 25 in this state is referred to as a standby position. The moving distance of the rod 25 from its standby position is referred to as clutch stroke, and is the controlled variable according to which the clutch is automatically controlled.

When the rod 25 is moved backwards from its standby position, the pressure load of the clutch disc 21 a against the flywheel 10a is increased in response to the moving distance of the rod 25. Initially the torque transmission between the flywheel 10a and the clutch disc 21a is accompanied by slip between the flywheel 10a and the clutch disc 21 a. When no further difference in the rate of revolution of the clutch disc 21a is generated by an increase in the pressure load caused by the movement of the rod 25, the flywheel 10a is rotating together with the clutch disc 21a with no slip. This state in which the flywheel 10a rotates together with the clutch disc 21a without slippage is referred to as the perfectly engaged state of the friction clutch 21, and the position of the rod 25 creating this state is referred to as the perfectly engaged rod position. Thus, the degree of slip between the flywheel 10a and the clutch disc 21a is controlled by controlling the clutch stroke of the rod 25 between the standby position and the perfectly engaged position by the clutch actuator 23. Hereinafter, any state in which the clutch stroke of the rod 25 is between the standby position and the perfectly engaged position, and the flywheel 10a slips relative to the clutch disc 21a, is referred to as a half clutch state. In addition, both the half clutch state and the perfectly engaged state are together referred to as engaged states of the friction clutch 21.

The automatic clutch 20 is provided with a stroke sensor 26. The stroke sensor 26 detects the clutch stroke **St** corresponding to the clutch stroke of the rod 25. The clutch stroke **St** is applied to state determination of the transmission of rotation by the friction clutch 21.

The transmission 30 includes the input shaft 31, an output shaft 32, and plural gear trains for gear shift. The input shaft 31 of the transmission 30 is connected to the clutch disc 21a of the friction clutch 21. The output shaft 32 is connected to an axle (not shown). The input shaft 31 is provided with a sensor 33 for detecting the rate of revolution of the input shaft 31 (hereinafter referred to as Ni). The transmission 30 includes shift actuator 41 actuating the gear trains for performing the gear shift. According to the above-described structure, the transmission 30 switches to required gear train by actuating the shift actuator 41.

The vehicle control system shown in Fig. 1 includes an electronic control unit (ECU) 50 functioning as a detecting means, a calculating means, and a correcting means. The ECU 50 is mainly composed of a well-known microcomputer (CPU) and includes a ROM in which various programs and maps are memorized, a RAM in which various data can be read or written, and an EEPROM in which data can be held without backup power supply. The ECU 50 is connected to the ignition switch 11, the sensor 16, the stroke sensor 26, the sensor 33, the clutch actuator 23, and the shift actuator 41. The ECU 50 detects the vehicle condition based on signals from various sensors and then actuates the clutch actuators 23 and the shift actuator 41 in response to the vehicle condition.

Specifically, the ECU 50 controls the transmission of rotation by the friction clutch 21 by actuating the clutch actuator 23. Then, the transmission of rotation by the friction clutch 21 is automatically controlled in response to the vehicle condition.

Further, the ECU 50 switches the gear trains of the transmission 30 by actuating the shift actuator 41, and then switching of the gear trains in the transmission 30 is automatically controlled in response to the vehicle condition.

Hereinafter, an outline of a relationship between the clutch torque and the clutch stroke concerning clutch control, and outline of a correction in the relationship, are explained. Fig. 9 is a graph showing the relationship between the clutch torque and the clutch stroke. In Fig. 9, a zero point of the clutch stroke corresponds to the foregoing standby position. A positive side (to the right in Fig. 9) relative to the zero point corresponds to the clutch stroke of the rod 25 towards the perfectly engaged state. When the clutch stroke is increased in the clutch engaging direction, the clutch torque is also increased.

In Fig. 9, a heavy line corresponds to an actual relation between the clutch torque and the clutch stroke in which characteristic variation is generated due to aged deterioration. A dotted line corresponds to a reference relation between the clutch torque and the clutch stroke memorized in the ROM of the ECU 50 as a factory setting. A thin line corresponds to a virtual relation between the clutch torque and the clutch stroke and has been corrected based on a difference between the actual relation and the reference relation. The clutch torque **Tcsi** (i = 1, 2, 3) indicates preset values of the clutch torque at each learning point previously provided so as to correspond to plural predetermined clutch stroke (three points), and the clutch torque **Tci** (i 1, 2, 3) is actual values of the clutch torque at each learning point. The actual clutch torque **Tc** (**Tci**) is schematically calculated in accordance with the following equation in the half clutch state by using an estimate of engine torque **Te,** engine inertia **Ie,** and **Ne** acceleration ω**e'**. The estimate of engine torque **Te** is a value of engine torque estimated with a well-known method. The engine inertia **Ie** is a design value peculiar to the engine 10. The **Ne** acceleration ω**e'** is a value of acceleration calculated based on **Ne**.

$$Tc = Te - Ie \times \omega e'$$

With reference to the correction in the relation between the clutch torque and the clutch stroke, initially, a clutch torque correction coefficient **kc(i)** is calculated at each learning point of the clutch torque **Tcsi** schematically in accordance with the following equation.

$$kc(i) = (Tci - Tcsi)/Tcsi$$

The clutch torque correction coefficient **kc(i)** corresponds to a proportional difference between the preset value and the actual value of the clutch torque at each learning point. In difference between a memorized value in the ROM and an actual value of the clutch torque at a point approximate to each learning point, the proportional difference between the preset value and the actual value (clutch torque correction coefficient **kc(i)**) corresponding to each learning point largely contributes to the difference at the point approximate to each learning point. In other words, the difference between the memorized value and the actual value at the point approximate to each learning point is approximately absorbed by multiplying the clutch torque correction coefficient **kc(i)** by the memorized value. Additionally, with reference to difference between a memorized value in the ROM and an actual value at a point corresponding to any clutch torque, the difference is approximately absorbed by giving weight to each value calculated by multiplying each clutch torque correction coefficient **kc(i)** by the memorized value depending on a contributing level of the clutch torque correction coefficient **kc(i)** at the memorized value. Hereinafter, one of the examples in the weighting is explained.

Fig. 8 is a graph which shows a membership function MS (i, clutch torque) (i =1, 2,3) for performing the weighting in response to the contributing level of each clutch torque correction coefficient **kc(i)** (i =1, 2, 3) at any clutch torque. The membership function **MS** (i, clutch torque) is set so that the sum of each value corresponding to any clutch torque can be [1]. This is why the difference between the memorized value and the actual value can be smoothly connected as the clutch torque correction coefficient **kc(i)** having large contributing level is switched. The membership function **MS** (1, clutch torque) is set to [1] up to an approximately intermediate value between the clutch torque **Tcs1** and the clutch torque **Tcs2** and set to [0] at the clutch torque **Tcs2** or more so that the weight can be given to the clutch torque correction coefficient **kc(1).** The membership function **MS** (1, clutch torque) is decreased gradually from the approximately intermediate value between the clutch torque **Tcs1** and the clutch torque **Tcs2** to the clutch torque **Tcs2.** The membership function **MS** (2, clutch torque) is set to [0] up to the approximately intermediate value between the clutch torque **Tcs1** and the clutch torque **Tcs2** and set to [1] at the clutch torque **Tcs2** so that the weight can be given to the clutch torque correction coefficient (2). The membership function **MS** (2, clutch torque) is increased gradually from the approximately intermediate value between the clutch torque **Tcs1** and the clutch torque **Tcs2** to the clutch torque **Tcs2.** On one hand, the membership function **MS** (2, clutch torque) is set to [0] at an approximately intermediate value between the clutch torque **Tcs2** and the clutch torque **Tcs3** or more. The membership function **MS** (2, clutch torque) is decreased gradually between from the clutch torque **Tcs2** to the approximately intermediate value between the clutch torque **Tcs2** and the clutch torque **Tcs3.** Further, the membership function MS (3, clutch torque) is set to [0] up to the clutch torque **Tcs2** and set to [1] at the intermediate value between the clutch torque **Tcs2** and the clutch torque **Tcs3** or more so that the weight can be given to the clutch torque correction coefficient (3). The membership function **MS** (3, clutch torque) is increased gradually from the clutch torque **Tcs2** to the intermediate value between the clutch torque **Tcs2** and the clutch torque **Tcs3.**

For example, when the clutch torque is controlled in order to transmit required target clutch torque **TM**, the difference between the memorized value and the actual value can be approximately absorbed by calculating the target clutch torque **TM** In accordance with the following equation with respect to base target clutch torque **TMB** depending on the vehicle condition. Hereinafter, the base target clutch torque **TMB** multiplied by the clutch torque correction coefficient **kc(i)** correspondingly calculated at each learning point is referred to as correction target clutch torque.

$$\text{Target clutch torque } TM = \Sigma\{kc(i) \times MS(i, TMB) \times TMB\}$$

In the above-described explanation, the clutch torque correction coefficient **kc(i)** is calculated at each learning point. However, the frequency of control at each learning point is limited, so that the clutch torque correction coefficient **kc(i),** which is calculated by approximation on the basis of each learning point, is actually applied.

Hereinafter, a manner of clutch control is described with reference to the flowcharts shown in Figs. 2-7. The clutch control is performed by calculation of the clutch torque correction coefficient **kc(i)** with the approximation and by calculation and setting the target clutch torque **TM.** This clutch control routine is repeatedly performed every predetermined period as long as the ignition switch 11 is in the on-state.

When the clutch control proceeds according to this routine, the ECU 50 initially performs calculation of base target clutch torque at step 101. That is, the ECU 50 calculates the base target clutch torque **TMB** in response to the vehicle condition based on the signals from various sensors. The base target clutch torque **TMB** corresponds to the target clutch torque as no characteristic variation is generated on the friction clutch 21 due to the aged deterioration, and as the actual relation between the clutch torque and the clutch stroke is not varied from the reference relation memorized in the ROM.

Next, the transaction proceeds to a subroutine at step 200, and the ECU 50 performs a calculation of clutch torque correction coefficient. That is, the transaction proceeds to step 201 in Fig. 3, and the ECU 50 calculates **Ne** acceleration ω' in accordance with the following equation.

$$\omega'(n) = (Ne(n) - Ne(n\text{-}l)) \times \alpha + \omega'(n-1) \times (1 - \alpha)$$

A character "**n**" corresponds to a calculation value at a present routine, and a character "**n-l**" corresponds to a calculation value at a previous routine. Hereinafter, each calculation value at the previous routine is added to a "buffer" in order to distinguish the calculation value at the present routine from the calculation value at the previous routine. For example, when the **Ne** acceleration is represented by **ω'(n),** the **Ne** acceleration buffer is represented by **ω'(n-1).** In the foregoing equation, the **Ne** acceleration w'(n) is calculated by what we call a moving average method, then temporary variation is absorbed by data smoothing. The coefficient "α" is a coefficient for defining data smoothing level. This data smoothing with the moving average method is called a filtering process.

Next, the transaction by the ECU 50 proceeds to step 202, and the ECU 50 determines whether the friction clutch 21 is in the half clutch state or not. Specifically, the ECU 50 may determine whether the friction clutch 21 is in the half clutch state or not based on a detected clutch stroke **St.** Alternatively, a detected value of deviation between the rate of revolution of the engine **Ne** and the rate of revolution of the input shaft **Ni** may be used to determine the half clutch state, and a setting state of vehicle control mode by the ECU 50 may be applied.

When in step 202 the ECU 50 determines that the friction clutch 21 is in the half clutch state, the transaction proceeds to step 203, and then the ECU 50 determines whether the friction clutch 21 was in the half clutch state or not at the immediately preceding clutch control routine. When the ECU 50 determines that friction clutch 21 was also in the half clutch state at the previous routine, the ECU 50 determines that the friction clutch 21 has been in the half clutch state continuously, and the transaction proceeds to step 204.

When the ECU 50 determines that the friction clutch 21 was not in the half clutch state at the previous clutch control routine, the ECU 50 determines that the friction clutch 21 has newly entered the half clutch state during the present routine, and the transaction proceeds to a subroutine at step 220 to perform clutch torque correction coefficient buffering. That is, the processing by the ECU 50 proceeds to step 221 in Fig. 5, and a counter is set to [1]. After that, the clutch torque correction coefficient **kc(i)** (i =1, 2, 3), which is calculated in accordance with the following manner, is sequentially registered as clutch torque correcting coefficient buffer **kc(i)** (i=1, 2, 3) at step 222, 223, and 224. Then, the transaction by the ECU 50 proceeds to step 204 in Fig. 3.

At step 204, the ECU 50 determines whether the difference between the rate of revolution of the engine **Ne** and the rate of revolution of the input shaft **Ni** is larger than a predetermined deviation threshold **ΔNth** or not. This is because even if the friction clutch 21 is in the half clutch state, the actual value of the clutch torque cannot be calculated by the above-mentioned equation when the difference between the rates of revolution **Ne** and **Ni** is small, and it is unfavourable that clutch torque correction ratio is calculated based on this equation.

When in step 204 the ECU 50 determines that the difference between the rates of revolution **Ne** and **Ni** is larger than the predetermined deviation threshold **ΔNth,** the transaction by the ECU 50 proceeds to a subroutine at step 230 (Fig. 3), and then the calculation of the clutch torque correction ratio is performed. That is, the transaction by the ECU 50 proceeds to step 231 in Fig. 6, and a counter is set to [1]. Then, a coefficient "β" is calculated by a map based on the relation between the clutch torque **Tcsi** and the base target clutch torque **TMB.** This coefficient "β" is a coefficient for defining data smoothing level as the moving average method is performed in the calculation of clutch torque correction ratio **(i).** The coefficient β is calculated about each clutch torque correction ratio **(i)** in order to adjust the data smoothing level in response to proportional difference between the base target clutch torque **TMB** and the clutch torque **Tcsi.** For example, the coefficient β is set so that the data smoothing level can be increased depending on increase in the proportional difference between the base target clutch torque **TMB** and the clutch torque **Tcsi**.

Next, the transaction by the ECU 50 proceeds to step 233, and the ECU 50 calculates the clutch torque correction ratio **(i)** in accordance with the following equation.

$$\text{Clutch torque correction ratio (i)} = \{(Te - \omega' \times Ie - Tci) / Tci\} \times \beta + \text{clutch torque correction ratio buffer (i)} \times (1 - \beta)$$

After the clutch torque correction ratio **(i)** (i =1, 2, 3) is sequentially calculated at step 232, 233, 234, and 235, the transaction by the ECU 50 proceeds to a subroutine at step 240 in Fig. 3.

On the other hand, when in step 204 the ECU 50 determines that the difference between the rates of revolution **Ne** and **Ni** is less than or equal to the predetermined deviation threshold Δ**Nth,** the transaction by the ECU 50 proceeds directly to the same subroutine at step 240.

A third route into the subroutine 240 is as follows. At step 202, if the ECU 50 determined that the friction clutch 21 is not in the half clutch state at the present routine, the transaction by the ECU 50 proceeds to step 205 in Fig. 4, and the ECU 50 determines whether the friction clutch 21 was in the half clutch state at the previous routine. When the ECU 50 determines that the friction clutch 21 was in the half clutch state at the previous routine, the ECU 50 determines that the haft clutch state in the friction clutch 21 has been ended at the present routine, and the transaction proceeds to step 206.

The ECU 50 sets a counter to [1] at step 206. Then, at step 207, the ECU 50 calculates the clutch torque correction coefficient **kc(i)** in accordance with the following equation.

$$kc(i) = \text{clutch torque correction ratio (i)} \times \gamma(i) + \text{clutch torque correction ratio buffer (i)} \times (1 - \gamma(i))$$

The coefficient "γ**(i)**" is a coefficient for defining data smoothing level as the moving average method is performed in the calculation of clutch torque correction coefficient **kc(i)**.

Next, the transaction by the ECU 50 proceeds to step 208, and the clutch torque correction ratio **(i)** is updated to the clutch torque correction coefficient **kc(i)** by the ECU 50. After the clutch torque correction coefficient **kc(i)** (i=1, 2, 3) is calculated and then the clutch torque correction ratio **(i)** (i =1, 2, 3) is updated sequentially at step 207, 208, 209, 210, the transaction by the ECU 50 proceeds to the subroutine of step 240 of Fig. 3.

When the ECU 50 determines that the friction clutch 21 was not in the half clutch state at the previous routine, the ECU 50 determines that the friction clutch 21 has continuously been not in the half clutch state, and then the transaction by the ECU 50 proceeds to the subroutine of step 240 in Fig. 3.

When the transaction proceeds to the subroutine at step 240 for performing clutch torque correction ratio buffering, the ECU 50 set a counter to [1] at step 241 in Fig. 7. Then, the clutch torque correction ratio **(i)** (i =1, 2, 3) calculated by the foregoing manner is sequentially registered as the clutch torque correction ratio buffer **(i)** (i =1, 2, 3).

As described above, the calculation of clutch torque correction coefficient **kc(i)** is performed only when the half clutch state in the friction clutch 21 has been ended. This is why variation of the clutch torque correction coefficient **kc (i)** concerning correction of the target clutch torque **TM** is included in next half clutch control. This is why generation of hunting or shock by frequent correction during the half clutch control is prevented.

Next, the transaction by the ECU 50 proceeds to step 211 in Fig. 3. The ECU 50 transfers the rate of revolution of the engine **Ne(n)** into the buffer as the rate of revolution of the engine in the last time period **Ne(n-1),** and the transaction proceeds to step 102 in Fig. 2. The ECU 50 calculates the target clutch torque **TM** in accordance with the following equation based on the above-described membership function and the clutch torque correction coefficient **kc(i).** As mentioned previously, the base target clutch torque **TMB** multiplied by the clutch torque correction coefficient **kc(i)** correspondingly calculated at each learning point is referred to as the correction target clutch torque.

$$TM = \Sigma\{kc(i) \times MS(i, TMB) \times TMB\}$$

As mentioned previously, the target clutch torque **TM** is calculated so that the characteristic variation by the aged deterioration can be absorbed.

Then, the transaction by the ECU 50 proceeds to step 103, and calculation of target clutch stroke is performed. Specifically, target clutch stroke, which corresponds to the target clutch torque **TM** being set based on the relation in Fig. 9 (shown with the thin line), is calculated.

Then the transaction by the ECU 50 proceeds to step 104, feedback control is performed so that the detected clutch stroke **St** can correspond to the calculated target clutch stroke, and a series of the transaction is ended.

According to the above described embodiment, the difference between the design value (**Tcsi**) and the actual value (**Tci**) of the clutch torque at plural predetermined clutch strokes (plural learning points) is differently detected, and then the clutch torque correction coefficient **kc(i)** for absorbing the difference between the design value and the actual value is differently calculated. Thus, the clutch stroke can be properly controlled based on the target clutch torque **TM** calculated by plural correction target clutch torque (**kc(i)** x **TMB**) based on the calculated clutch torque correction coefficient **kc(i).** Then, the feedback control of the clutch torque can be performed with the characteristic variation by the aged deterioration in the friction clutch 21 being absorbed.

According to the described embodiment, the clutch stroke can be properly controlled based on the target clutch torque **TM** calculated by giving the weight to the correction target clutch torque (**kc(i)** X **TMB**) in response to the contributing level to the base target clutch torque **TMB.**

According to the described embodiment, even if the base target clutch torque **TMB** is varied so that the contributing level (that is, the weighting) of the correction target clutch torque (**kc(i)** x **TMB**) to the base target clutch torque **TMB** can be switched, switching of the weighting can be absorbed by the membership function, then rapid variation of the clutch stroke can be prevented.

According to the described embodiment, each clutch torque correction coefficient **kc(i)** is calculated with the filtering process. Thus, the clutch stroke can be properly corrected by the target clutch torque **TM** calculated based on the clutch torque correction coefficient **kc(i)** in which data variation is prevented.

Of course, the invention is not limited to the above-described embodiment, and the following modification may be allowable.

In the described embodiment, the target clutch torque **TM** is calculated based on each correction target clutch torque (**kc(i) x TMB**) at three learning points. This number of learning points is by way of example only, and any number of learning points may be set, so long as plural learning points are provided.

In the described embodiment, the clutch torque is controlled by the clutch actuator 23 which actuates the clutch lever 22 with the rod 25. Alternatively the clutch torque may be controlled, for example, by any other actuator which actuates the release bearing 27, the diaphragm spring 28, and the pressure plate 29.

In the described embodiment, the target clutch stroke is calculated based on the target clutch torque **TM** calculated by the plural correction target clutch torque (**kc(i)** x **TMB**) based on each clutch torque correction coefficient **kc(i),** and the feedback control is performed based on the target clutch stroke. Correspondingly, the base target clutch stroke is calculated based on the base target clutch torque **TMB** for example, and the feedback control may be performed by the target clutch stroke calculated by the correction target clutch stroke in which the base target clutch stroke is multiplied by each correction coefficient. In this case, calculation order is only different, and a same process is actually performed in the calculation.

In the described embodiment, variation of the membership function is one of the examples. A method of the weighting of the clutch torque correction coefficient **kc(i)** to the base target clutch torque is not limited to the membership function, and any appropriate weighting function may be applied.

## Claims

1. A clutch control device for controlling clutch torque transferred between a flywheel (10a) and a clutch disc (21a) based on a controlled variable of a clutch actuator (23) to establish a target clutch torque, comprising detecting means (50) for detecting a difference between the target clutch torque and an actual value of the clutch torque at a controlled learning point corresponding to a particular predefined clutch engagement condition, calculating means (50, 207) for calculating a correction coefficient for absorbing the difference between the target clutch torque and the actual value of the clutch torque at that learning point, and correcting means (50, 103, 104) for correcting the controlled variable of the actuator (23) by applying the correction coefficient,
**characterized in that**

    the detecting means (50) is effective to detect differences between a target clutch torque and an actual value of the clutch torque at plural predetermined controlled learning points corresponding to different predefined clutch engagement conditions;
    the calculating means (50, 207) is effective to calculate- different correction coefficients **(kc(i))**, one for each of the respective controlled learning points; and
the correcting means (50, 103, 104) is effective to correct the controlled variable of the actuator (23) by applying all of the correction coefficients, each of those correction coefficients being weighted by a function which is dependent on the spacing between the current clutch engagement condition and that corresponding to the respective learning point.

**2.** A clutch control device according to claim 1, wherein the weighting of the different correction coefficients is based on a membership function **(Ms(i))** for each of the correction coefficients **(Kc(i)).**

**3.** A clutch control device according to claim 1 or claim 2, wherein the calculating means (50, 207) calculates each of the correction coefficients **(Kc(i))** using a filtering process.

**4.** A clutch control device according to any preceding claim, wherein the sum of all of the weightings applied to the different correction coefficients **(Kc(i))** for all of the clutch engagement conditions is one.

## Patentansprüche

**1.** Kupplungssteuerungseinrichtung zum Steuern eines Kupplungsdrehmoments, das zwischen einem Schwungrad (10a) und einer Kupplungsscheibe (21 a) übertragen wird, basierend auf einer gesteuerten Variablen eines Kupplungsstellglieds (3) zum Herstellen eines Zielkupplungsdrehmoments, enthaltend ein Erfassungsmittel (50) zum Erfassen einer Differenz zwischen dem Zielkupplungsdrehmoment und einem aktuellen Wert des Kupplungsdrehmoments an einem gesteuerten Lernpunkt, der einem speziellen vordefinierten Kupplungseingriffszustand entspricht, ein Berechnungsmittel (50, 207) zum Berechnen eines Korrekturkoeffizienten zum Absorbieren der Differenz zwischen dem Zielkupplungsdrehmoment und dem aktuellen Wert des Kupplungsdrehmoments an dem Lernpunkt, und ein Korrekturmittel (50,103, 104) zum Korrigieren der gesteuerten Variablen des Stellglieds (23) durch Anwenden des Korrekturkoeffizienten,
**dadurch gekennzeichnet, dass**

das Erfassungsmittel (50) effektiv zum Erfassen von Differenzen zwischen einem Zielkupplungsdrehmoment und einem aktuellen Wert des Kupplungsdrehmoments an mehreren vorbestimmten gesteuerten Lernpunkten entsprechend unterschiedlichen vorbestimmten Kupplungseingriffszuständen ist;
das Berechnungsmittel (50, 207) effektiv zum Berechnen von unterschiedlichen Korrekturkoeffizienten (kc(i)) ist, einen für jeden der jeweiligen gesteuerten Lernpunkte; und
das Korrekturmittel (50, 103, 104) effektiv zum Korrigieren der gesteuerten Variablen des Stellglieds (23) durch Anwenden von allen Korrekturkoeffizienten ist, wobei jeder dieser Korrekturkoeffizienten durch eine Funktion gewichtet wird, die abhängig von dem Abstand zwischen dem gegenwärtigen Kupplungseingriffszustand und dem entsprechenden für den jeweiligen Lempunkt ist.

**2.** Kupplungssteuerungseinrichtung nach Anspruch 1, wobei die Wichtung der unterschiedlichen Korrekturkoeffizienten basierend auf einer Zugehörigkeitsfunktion (Ms(i)) für jeden der Korrekturkoeffizienten (Kc(i)) beruht.

**3.** Kupplungssteuerungseinrichtung nach Anspruch 1 oder 2, wobei das Berechnungsmittel (50, 207) jeden der Korrekturkoeffizienten (Kc(i)) unter Verwendung eines Filtervorgangs berechnet.

**4.** Kupplungssteuerungseinrichtung nach einem der vorhergehenden Ansprüche, wobei die Summe von allen Wichtungen, die auf die unterschiedlichen Korrekturkoeffizienten (Kc(i)) für alle Kupplungseingriffszustände angewendet werden, Eins ist.

## Revendications

**1.** Dispositif de commande d'embrayage destiné à commander un couple d'embrayage transféré entre un volant (10a) et un disque d'embrayage (21a) en fonction d'une variable commandée d'un actionneur d'embrayage (23) pour établir un couple d'embrayage cible, comprenant des moyens de détection (50) destinés à détecter une différence entre le couple d'embrayage cible et une valeur réelle du couple d'embrayage à un point d'apprentissage commandé correspondant à une condition de prise d'embrayage prédéfinie particulière, des moyens de calcul (50, 207) destinés à calculer un coefficient de correction destiné à absorber la différence entre le couple d'embrayage cible et la valeur réelle du couple d'embrayage à ce point d'apprentissage, et des moyens de correction (50, 103, 104) destinés à corriger la variable commandée de l'actionneur (23) en appliquant le coefficient de correction,
**caractérisé en ce que**

les moyens de détection (50) sont efficaces pour détecter des différences entre un couple d'embrayage cible et une valeur réelle du couple d'embrayage à plusieurs points d'apprentissage commandés prédéterminés correspondant à des conditions de prise d'embrayage prédéfinies différentes ;
les moyens de calcul (50, 207) sont efficaces pour calculer des coefficients de correction différents (kc(i)), un pour chacun des points d'apprentissage commandés respectifs; et
les moyens de correction (50, 103, 104) sont efficaces pour corriger la variable commandée de l'actionneur (23) en appliquant tous les coefficients de correction, chacun de ces coefficients de correction étant pondéré par une fonction qui dépend de l'espacement entre la condition de prise d'embrayage actuelle et celle correspondant au point d'apprentissage respectif.

2. Dispositif de commande d'embrayage selon la revendication 1, dans lequel la pondération des différents coefficients de correction est fondée sur une fonction de membre (Ms(i)) pour chacun des coefficients de correction (Kc(i)).

3. Dispositif de commande d'embrayage selon la revendication 1 ou la revendication 2, dans lequel les moyens de calcul (50, 207) calculent chacun des coefficients de correction (Kc(i)) à l'aide d'un procédé de filtrage.

4. Dispositif de commande d'embrayage selon l'une quelconque des revendications précédentes, dans lequel la somme de toutes les pondérations appliquées aux différents coefficients de correction (Kc(i)) pour toutes les conditions de prise d'embrayage est un.

FIG. 1

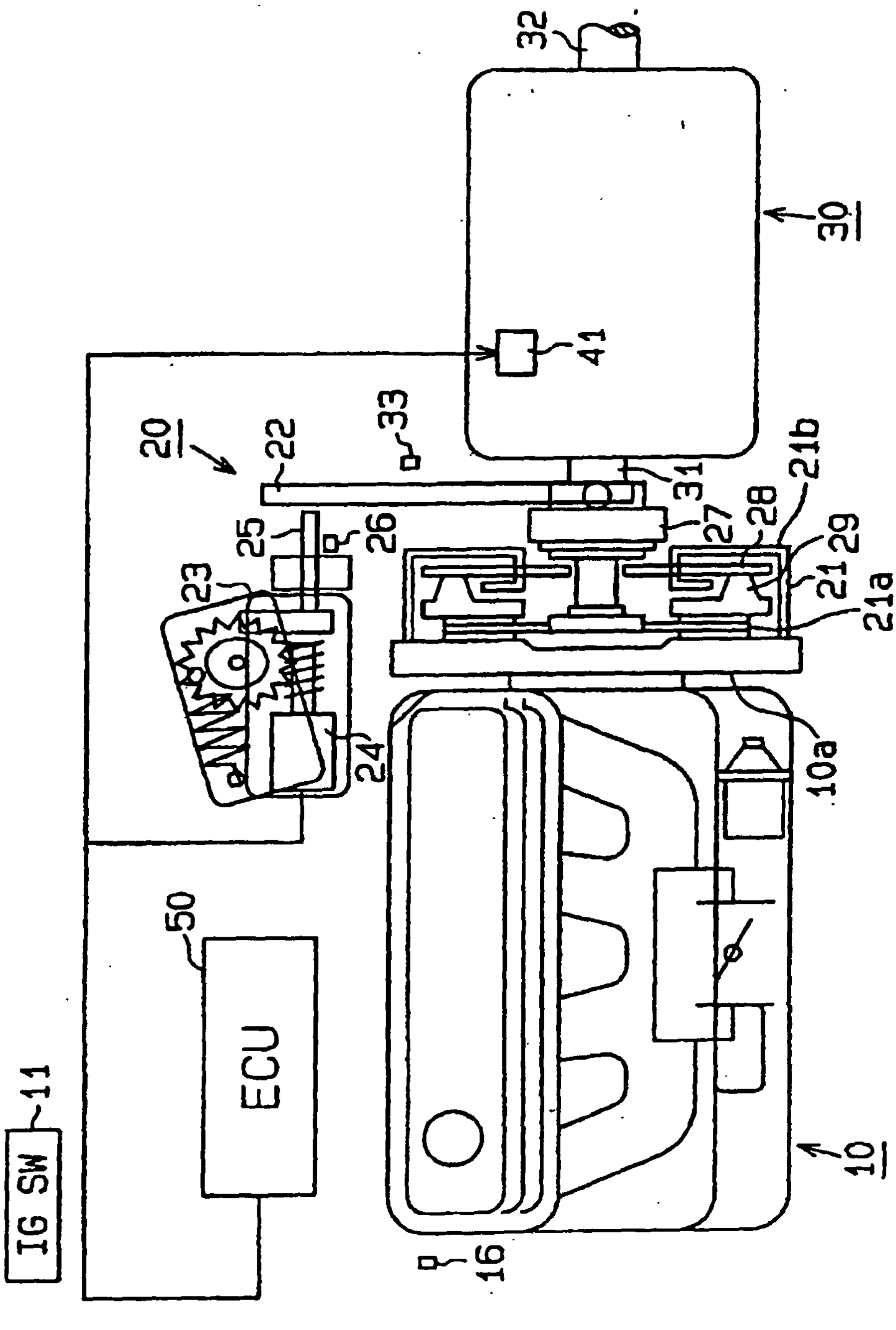
32
30
41
20
22
33
31
21b
25
26
27
28
29
23
21
21a
24
10a
50
ECU
IG SW
11
10
16

FIG. 2

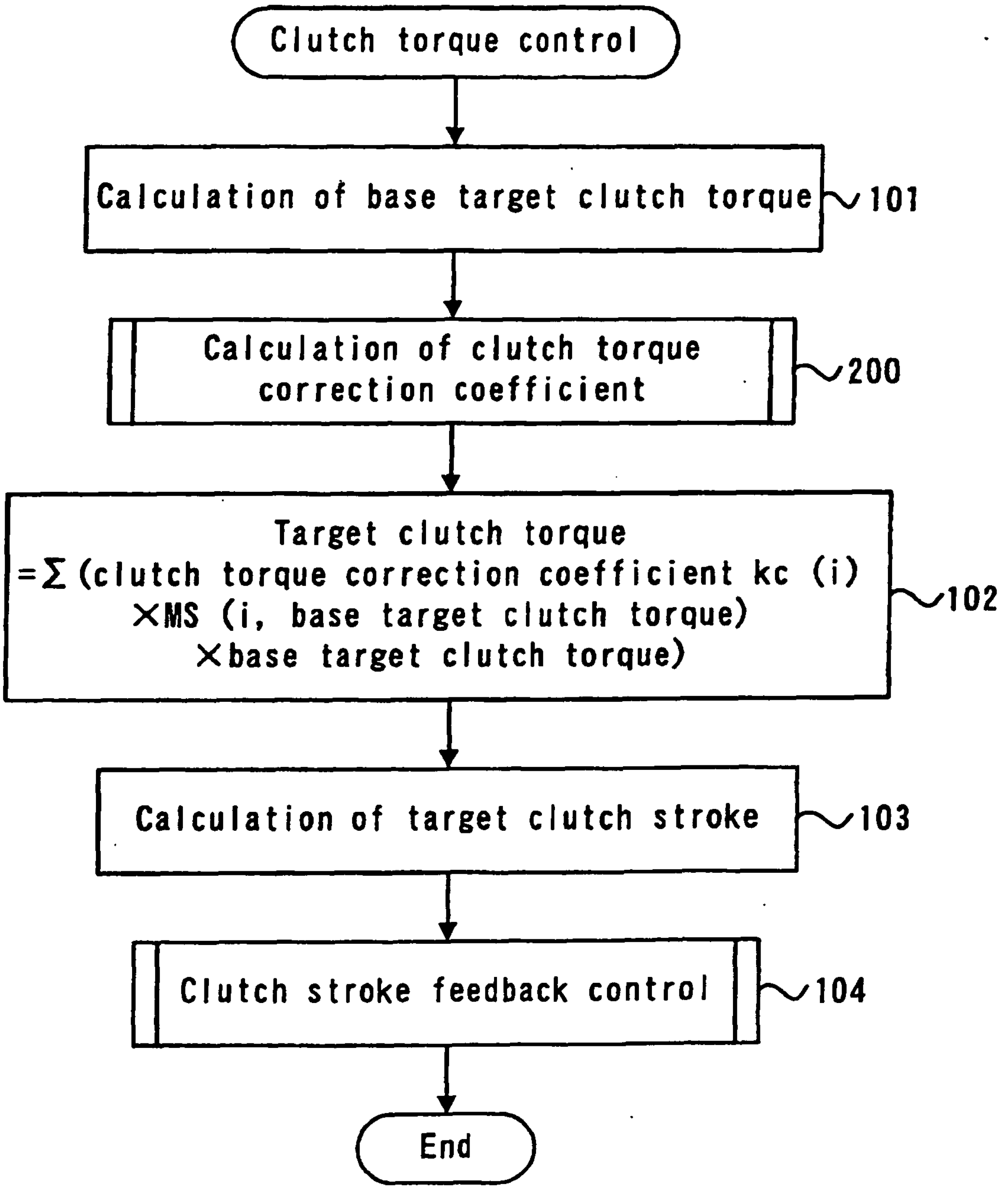
Clutch torque control
Calculation of base target clutch torque
101
Calculation of clutch torque correction coefficient
200
Target clutch torque
=Σ (clutch torque correction coefficient kc (i)
×MS (i, base target clutch torque)
×base target clutch torque)
102
Calculation of target clutch stroke
103
Clutch stroke feedback control
104
End

FIG. 3

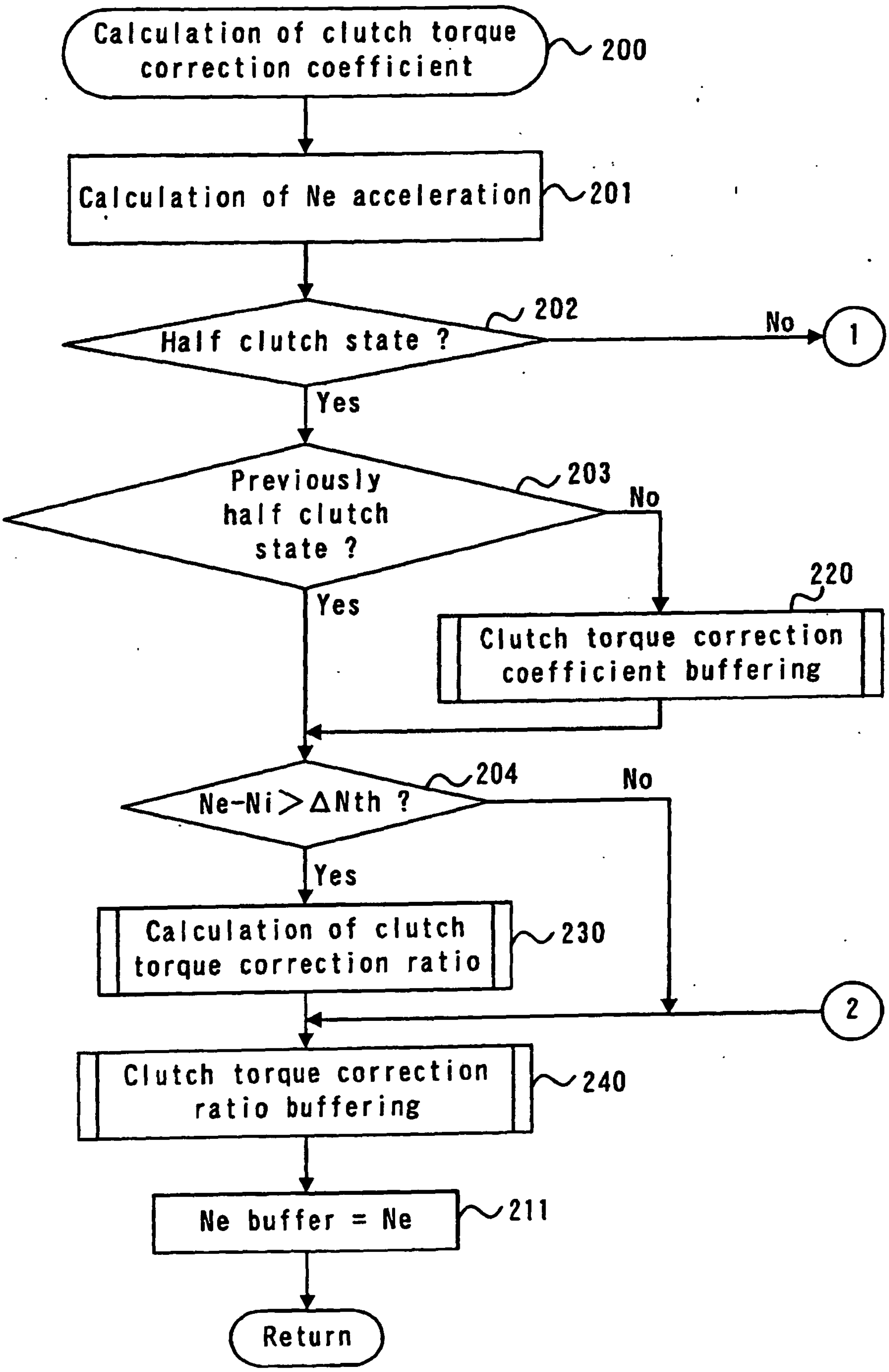
Calculation of clutch torque correction coefficient
200
Calculation of Ne acceleration
201
Half clutch state ?
202
No
1
Yes
Previously half clutch state ?
203
No
220
Clutch torque correction coefficient buffering
Yes
Ne-Ni>ΔNth ?
204
No
Yes
Calculation of clutch torque correction ratio
230
2
Clutch torque correction ratio buffering
240
Ne buffer = Ne
211
Return

FIG. 4

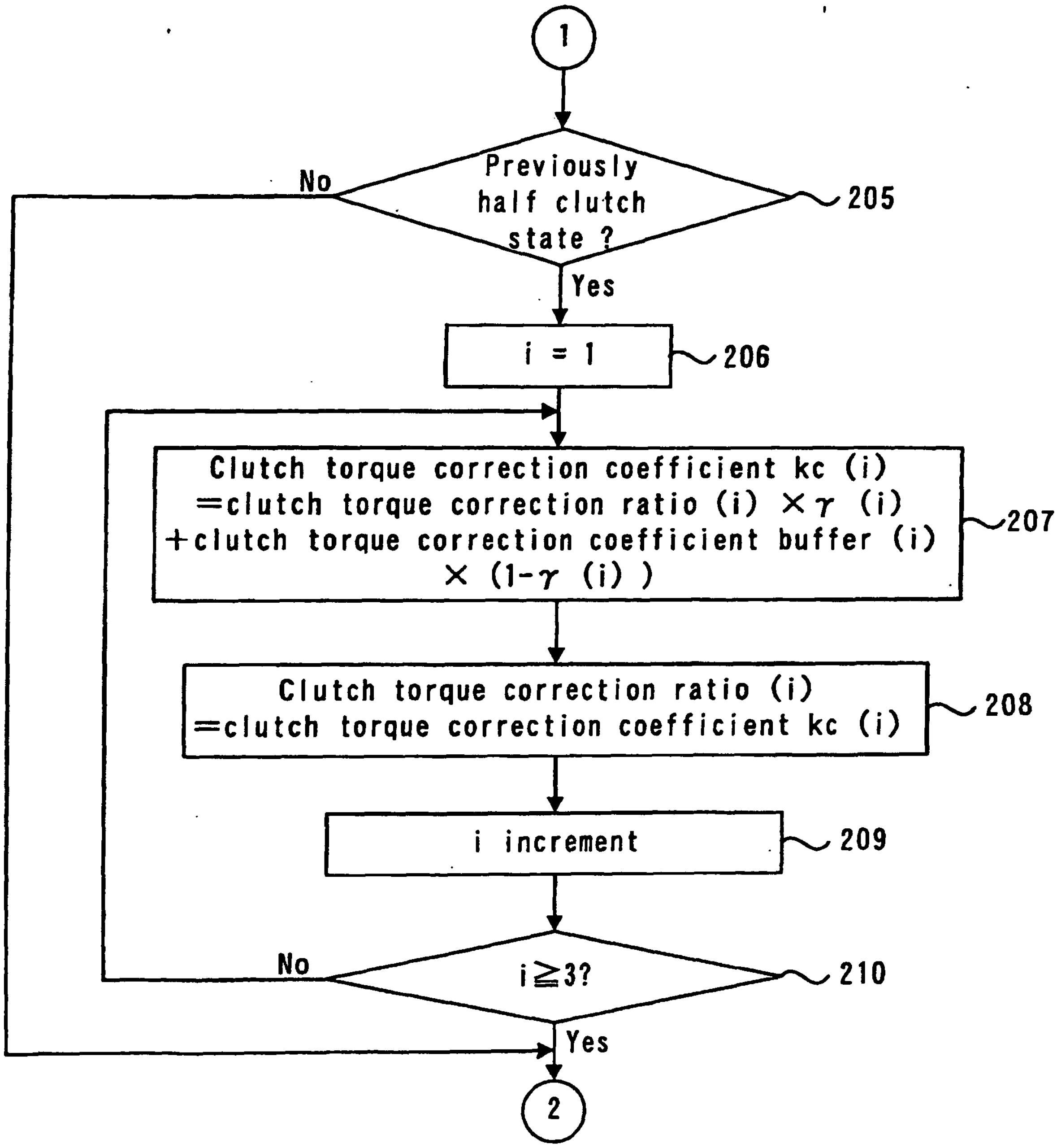
1
Previously half clutch state ?
No
Yes
205
i = 1
206
Clutch torque correction coefficient kc (i) =clutch torque correction ratio (i) ×γ (i) +clutch torque correction coefficient buffer (i) × (1-γ (i) )
207
Clutch torque correction ratio (i) =clutch torque correction coefficient kc (i)
208
i increment
209
i≧3?
No
Yes
210
2

FIG. 5

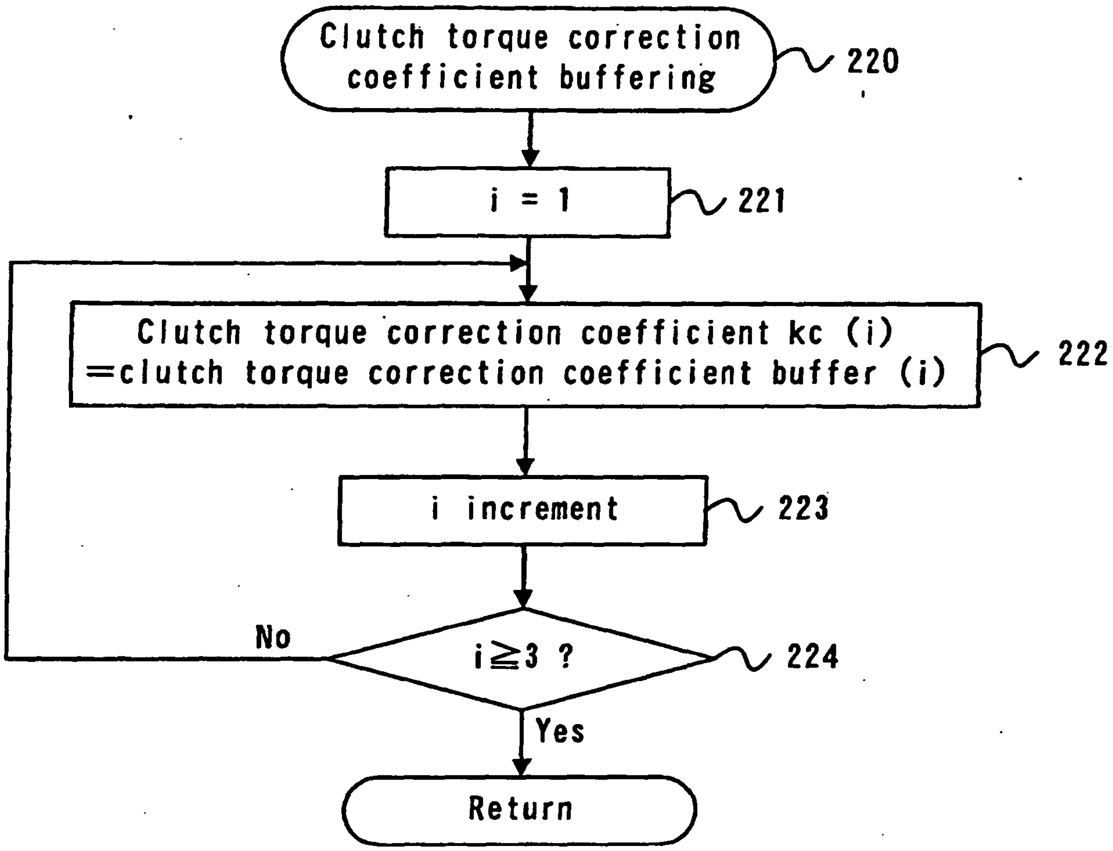
Clutch torque correction coefficient buffering
220
i = 1
221
Clutch torque correction coefficient kc (i) =clutch torque correction coefficient buffer (i)
222
i increment
223
No
i≧3 ?
224
Yes
Return

FIG. 6

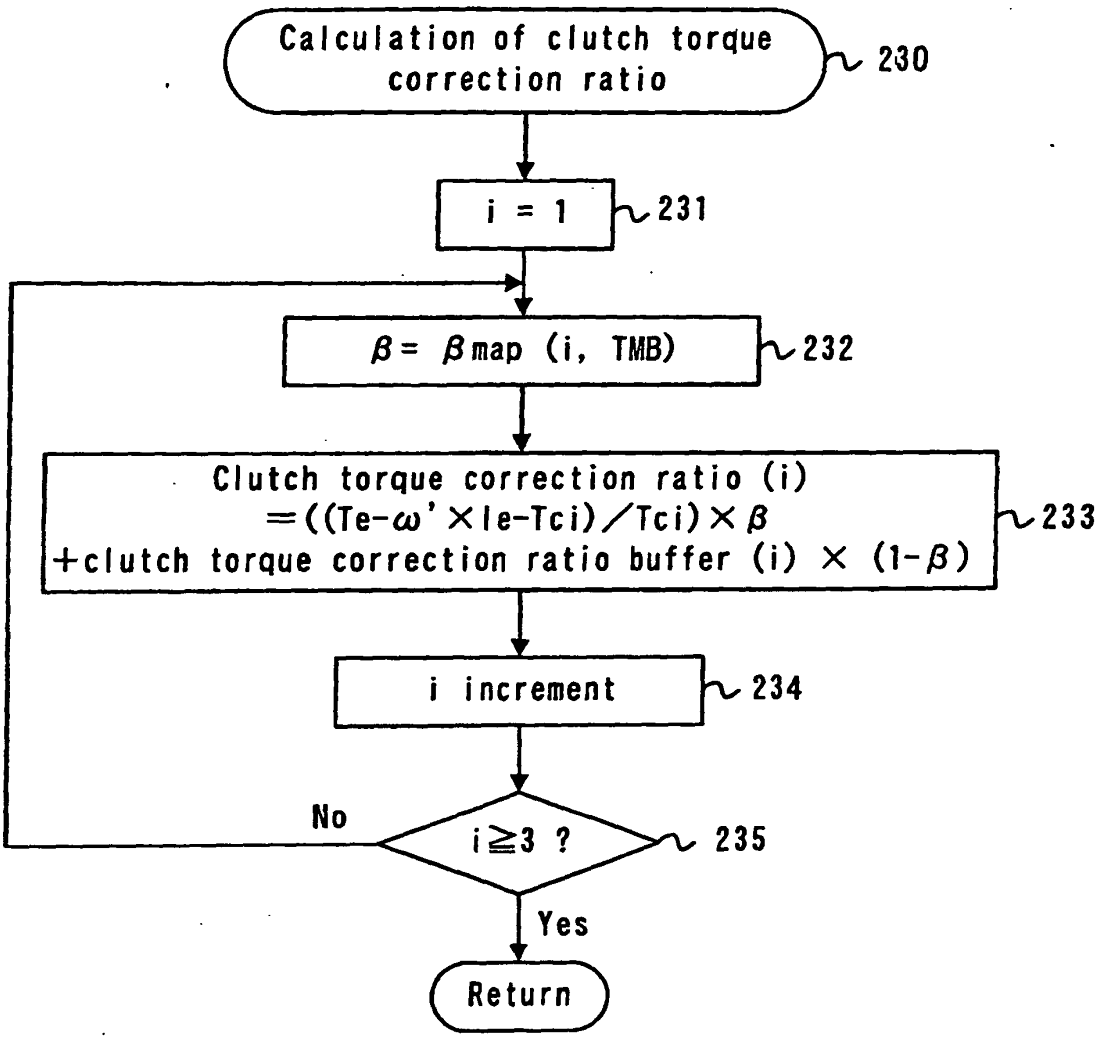
Calculation of clutch torque correction ratio
230
i = 1
231
β = βmap (i, TMB)
232
Clutch torque correction ratio (i)
=((Te-ω'×Ie-Tci)/Tci)×β
+clutch torque correction ratio buffer (i) × (1-β)
233
i increment
234
No
i≧3 ?
235
Yes
Return

FIG. 7

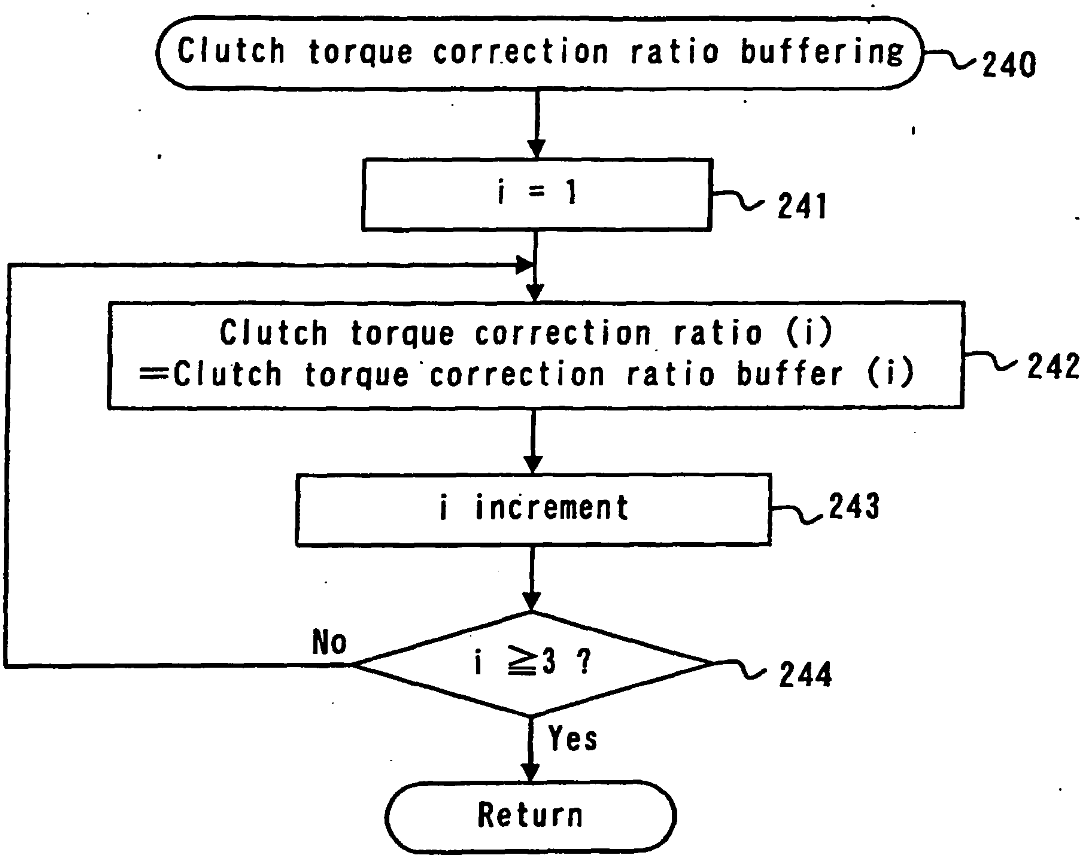
Clutch torque correction ratio buffering
240
i = 1
241
Clutch torque correction ratio (i)
=Clutch torque correction ratio buffer (i)
242
i increment
243
i ≧3 ?
244
No
Yes
Return

FIG. 8

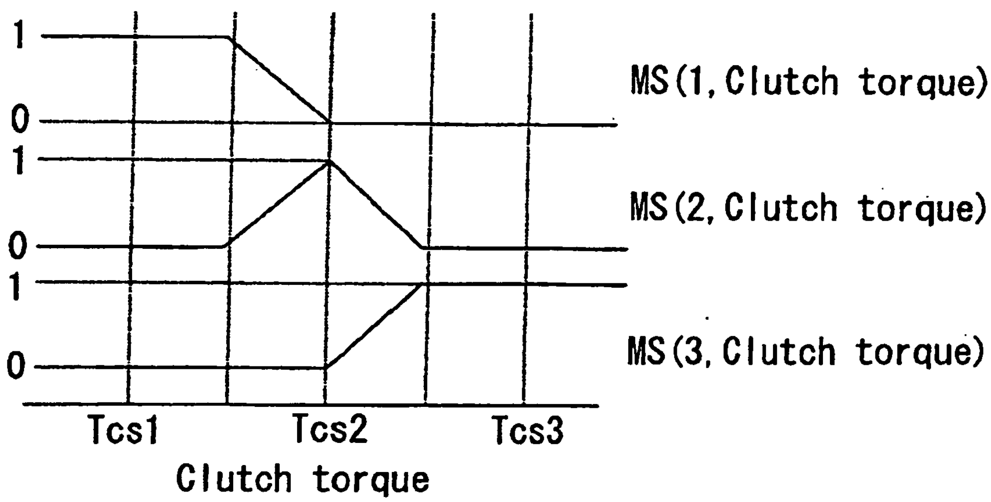
1
0
1
0
1
0
MS(1, Clutch torque)
MS(2, Clutch torque)
MS(3, Clutch torque)
Tcs1
Tcs2
Tcs3
Clutch torque

FIG. 9

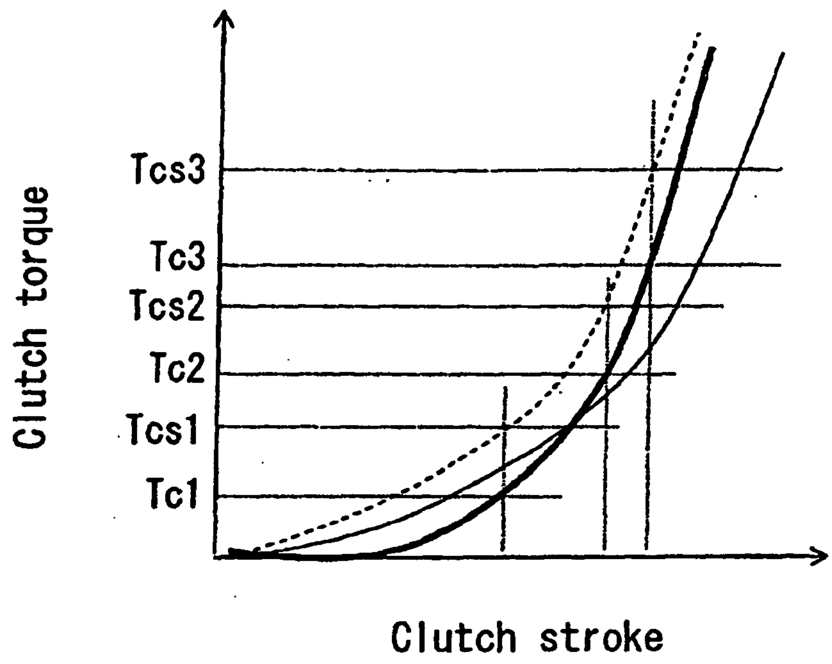

FIG. 10

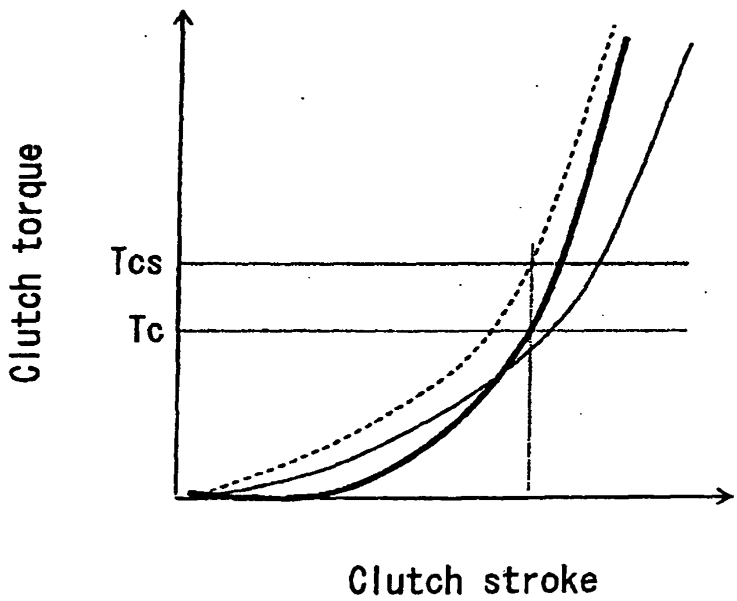

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 10126080 A